# EUROPÄISCHE PATENTSCHRIFT

(11) **EP 2 309 828 B1**
(45) Veröffentlichungstag und Bekanntmachung des Hinweises auf die Patenterteilung: **15.03.2023**
(21) Anmeldenummer: 10008407.8
(22) Anmeldetag: 12.08.2010
(51) Int. Cl.: H05B 41/28, H05B 41/24, H01J 65/04

(54) **Verfahren zum Betreiben einer elektrodenlosen Entladungslampe**
Method for operating an electrode-free discharge lamp
Procédé de fonctionnement d'une lampe à décharge sans électrodes

(30) Priorität: 07.10.2009 DE 102009048562
(43) Veröffentlichungstag der Anmeldung: 13.04.2011
(73) Patentinhaber: Heraeus Noblelight GmbH, 63450 Hanau (DE)
(72) Erfinder: Dieudonné, Walter, 63801 Kleinostheim (DE); Dethlefs, Marc, 63838 Großkrotzenburg (DE); Arnold, Erich, Dr., 55127 Mainz (DE)
(74) Vertreter: Heraeus IP

(56) Entgegenhaltungen:
- WO-A1-2009/014709
- US-A- 5 027 041
- US-A1- 2004 113 569

## Beschreibung

Die Erfindung betrifft ein Verfahren zum Betreiben einer elektrodenlosen Entladungslampe sowie eine Vorrichtung zum Betreiben einer derartigen Lampe.

Der Einsatz von elektrodenlosen Lampen findet beispielsweise in der Resonanzmessung ihren Einsatz. Die hierbei eingesetzten Entladungslampen weisen keine inneren, d.h. innerhalb des Lampenkörpers angebrachten Elektroden auf. Die gasspezifische Strahlung wird durch eine Plasmaentladung erzeugt, welche z.B. induktiv mittels einer Hochfrequenzspule eingekoppelt wird. Die Strahlungserzeugungsmechanismen bei der Plasmaentladung sind meist Stoßionisationsvorgänge, bei welchen die Moleküle des Gases entweder dissoziiert und/oder teilweise oder ganz von ihren Elektronenhüllen befreit werden. Die nötige Energie hierzu entnimmt das Gas aus dem Hochfrequenzfeld. Bedingt dadurch, dass die elektrodenlosen Entladungslampen keine Elektroden aufweisen, erfolgt auch keine Gasaufzehrung an den Elektroden, wie bei gängigen Lampen mit Elektroden.

Da die elektrodenlosen Entladungslampen oft Gegenstand einer Messeinheit sind, sind derartige Lampen meist fest in ein Lampengehäuse eingebaut und werden nur im Falle der Beschädigung gewechselt. Dabei ist das Wechseln der elektrodenlosen Entladungslampe äußerst aufwendig und umständlich. Es ist daher wünschenswert, dass die Entladungslampen eine möglichst lange Lebensdauer aufweisen bei optimalen Zündverhältnissen und Lichtintensitäten, um ein häufiges Austauschen der Lampen zu vermeiden.

Der Betrieb der bisher bekannten elektrodenlosen Entladungslampen erfolgt mittels eines Zündspannungsgenerators und eines Hochfrequenzverstärkers. Beide Schaltungsteile sind in der Zündphase gleichzeitig aktiv wobei der Zündspannungsgenerator nach erfolgreicher Zündung abgeschaltet wird. Die bisher eingesetzten Vorschlaggeräte für die elektrodenlosen Entladungslampen stellen jedoch im Betriebsarbeitspunkt nicht ausreichend sicher, dass es zu einer Zündung kommt. Als mögliche Ursachen hierfür sind Toleranzen der elektronischen Bauteile, deren Chargenschwankung sowie Toleranzen bei der Lampenherstellung zu nennen. Darüberhinaus kommt es bei elektrodenlosen Gasentladungslampen zu Zündschwierigkeiten nach längerem Nichtbetrieb aufgrund des Mangels an freien Elektronen im Lampenkörper. Sollte es hierbei in einem Zeitfenster zu keiner Zündung kommen, so wird der Zündkreis für ein weiteres Zeitfenster abgeschaltet, um eine Überlastung des Kreises zu verhindern und unerwünschte EMV-Störung zu verhindern. Dieser Vorgang wird meist solange wiederholt, bis es zu einer erfolgreichen Zündung der Lampe gekommen ist. Es hat sich gezeigt, dass es hierbei zu Gesamtzeiten von mehr als 10 Minuten kommen kann, bis eine Zündung der Lampe erfolgt.

Die DE 196 30 565 B4 beschreibt eine elektrodenlose Gasentladungslampe, welche mit einer Gasmischung gefüllt ist und eine entsprechende gasspezifische, elektromagnetische Resonanzstrahlung erzeugt. Die Gasentladungslampe ist in einem metallischen Gehäuse angeordnet und wird mittels einer Hochfrequenzspule betrieben. Die hier vorgeschlagene Lösung hat den Nachteil, dass die dort verwendete elektrodenlose Gasentladungslampe bedingt durch ihre spezifische Bauweise nicht besonders langlebig ist und daher öfters ausgetauscht werden muss, was einen hohen Zeitaufwand bedeutet und damit kostenintensiv ist.

WO 2009/014709 A1 betrifft Systeme und Verfahren zum Erzeugen von Licht mit elektrodenlosen Plasmalampen.

US 5,027,041 A betrifft großformatige Videoanzeigen mit zum Bilden von Pixeln angeordneten elektrodenlosen Lampen.

US 2004 0 113 569 A1 betrifft einen Leistungsschaltkreis zum Betreiben einer Leuchtröhre, wie einer Kaltkathoden-Fluoreszenzlampe (CCFL), und speziell das Starten einer Leuchtröhre.

Aufgabe der hier vorliegenden Erfindung ist es, eine Vorrichtung bereit zu stellen, in welcher eine elektrodenlose Entladungslampe sicher gezündet werden kann und die einen Betrieb der Lampe innerhalb von 2 Sekunden nach dem Anlegen der Versorgungsspannung gewährleistet.

Die gestellte Aufgabe wird erfindungsgemäß mit einer elektrodenlosen Entladungslampe entsprechend den Merkmalen des Anspruchs 1 gelöst.

Weitere vorteilhafte Ausgestaltungen der Erfindung sind in den Unteransprüchen gegeben.

Das erfindungsgemäße Verfahren zum Betreiben einer elektrodenlosen Entladungslampe, wobei die Entladungslampe einen aus Glas bestehenden Lampenkörper aufweist, welcher mit Gas befüllt ist, sieht vor, dass während der Zündung der elektrodenlosen Entladungslampe die Arbeitsfrequenz der Lampe mittels eines Wobbelgenerators beeinflusst wird. Dabei sind sowohl die elektrodenlose Entladungslampe als auch der Wobbelgenerator innerhalb eines Gehäuses angeordnet. Mittels des Wobbelgenerators wird während der Zündphase die Arbeitsfrequenz der Endstufe zyklisch verstimmt. Dieser Vorgang führt zu einer Felderhöhung des elektrischen Feldes an der Lampe und stellt der möglichen Gasentladung eine bessere Möglichkeit zur Zündung zur Verfügung.

Ein Wobbelgenerator, auch oft nur Wobbler genannt, ist ein Gerät oder eine Schaltung zum erzeugen von Frequenzen in einem festgelegten Bereich. Beim Wobbelgenerator variiert die Ausgangsfrequenz zyklisch.

Es hat sich gezeigt, dass durch den Einsatz eines Wobbelgenerators eine sichere Zündung und somit ein sicherer Betrieb der elektrodenlosen Entladungslampe sichergestellt werden kann. Besonders elektrodenlose Entladungslampen, die mit einem höheren Druck befüllt sind, können mittels eines derartigen Wobbelgeneraturs einfach und sicher gezündet werden. Der Einsatz eines Wobbelgenerators zur Zündung der elektrodenlosen Entladungslampe führt dazu, dass der Betrieb der Lampe innerhalb von 2 Sekunden nach dem Anlegen der Versorgungsspannung gewährleistet werden kann.

Es hat sich gezeigt, dass es dabei von Vorteil ist, wenn die Arbeitsfrequenz beim Zünden der Lampe mittels des Wobbelgenerators verringert wird. Dies bedeutet, dass der Wobbelgenerator die Oszillatorfrequenz im eingestellten Arbeitspunkt abwärts zu einer niedrigen Frequenz verstimmt und somit die Resonanzkurve mit dem Effekt eines größeren elektrischen Feldes durchläuft, das der Entladungslampe angeboten wird. Erreicht der Wobbelgenerator hierbei die niedrigste Arbeitsfrequenz, so wird die Frequenz wieder erhöht bis die Arbeitsfrequenz anschließend wieder erreicht wird.

Das erfindungsgemäße Verfahren sieht vor, dass während der Beeinflussung der Arbeitsfrequenz durch den Wobbelgenerator eine zusätzliche Zündspannung zur Verfügung gestellt wird. Diese Zündspannung wird vorzugsweise durch einen Hochspannungstrafo erzeugt. Dabei wird die Photoionisation und somit die Zündwilligkeit der elektrodenlosen Entladungslampe erhöht. Dieser Vorgang wird normalerweise so lange wiederholt, bis es zu einer erfolgreichen Zündung gekommen ist, welche mit dem erfindungsgemäßen Verfahren meist unterhalb von <2 Sekunden erfolgt.

Die Erfindung wird nachfolgend anhand eines weniger bevorzugten Ausführungsbeispiels und unter Bezugnahme der beigefügten Figur näher erläutert.

Dabei zeigt in schematischer Darstellung
Figur 1: Einfluss des Verstärkungsfaktors
Figur 2: Einfluss des Arbeitspunktes f_{A} die Intensität
Figur 3: Einfluss des Wobbelbereich
Figur 4: Blockschaltbild

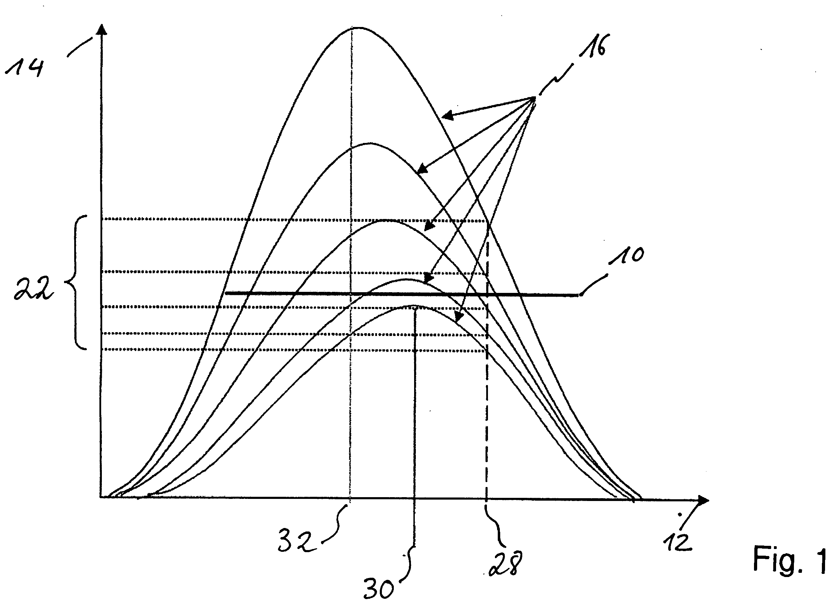

Figur 1 zeigt den Einfluss des Verstärkungsfaktors der Endstufe auf die Lampenintensität bei einer konstanten Arbeitsfrequenz f_{A}. 28.

Mittels eines Potentiometers wird der gewünschte Verstärkungsfaktor 16 eingestellt. Es ist zu erkennen, dass bei zu geringem Verstärkungsfaktor 16, die Lampe nicht mehr gezündet werden kann (Betriebspunkt liegt unterhalb der Zündschwelle 10). Hieraus ist abzuleiten, dass die Lampe nur mit hohen Intensitäten betrieben werden kann. Dieser Zustand ist nachteilig, weil die Lebensdauer der Lampe sich bei hohen Intensitäten verkürzt.

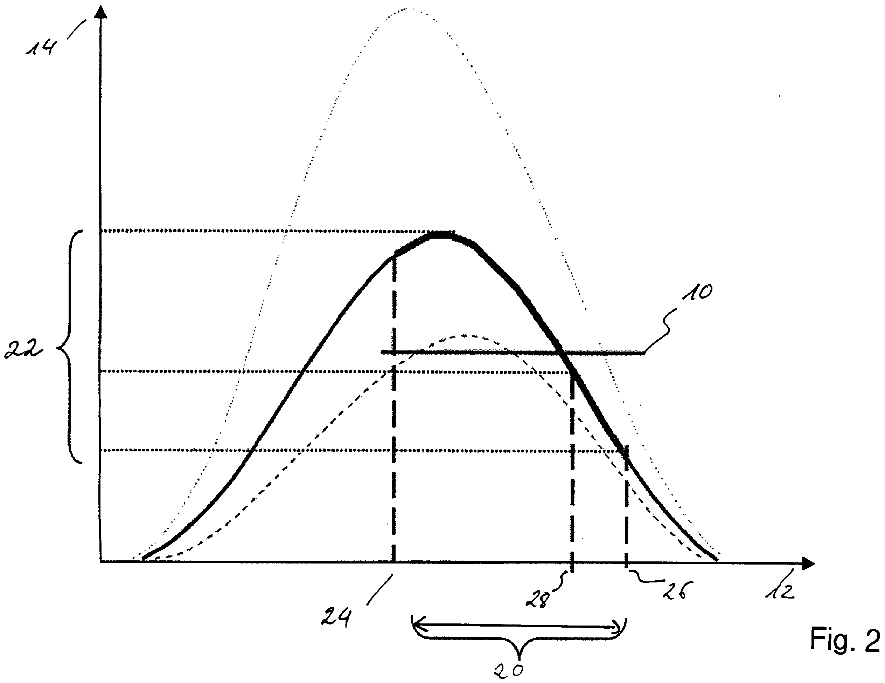

Figur 2 zeigt den Einfluss der Arbeitsfrequenz auf die Intensität bei einem fest eingestellten Verstärkungsfaktor 16.

Je nach gewählter Arbeitsfrequenz wird eine gewünschte Lampenintensität erzielt.

Es ist zu erkennen, dass bei einer zu hoch eingestellten Arbeitsfrequenz 28, die Lampe nicht zündet (Betriebspunkt liegt unterhalb der Zündschwelle 10). Hieraus ist abzuleiten, dass die Lampe nur mit Intensitäten oberhalb der Zündschwelle 10 gezündet und betrieben werden kann. Dieser Zustand ist nachteilig, weil sich die Lebensdauer der Lampe bei hohen Intensitäten verkürzt und der Lampenbetrieb auch bei niedrigen Intensitäten erforderlich ist.

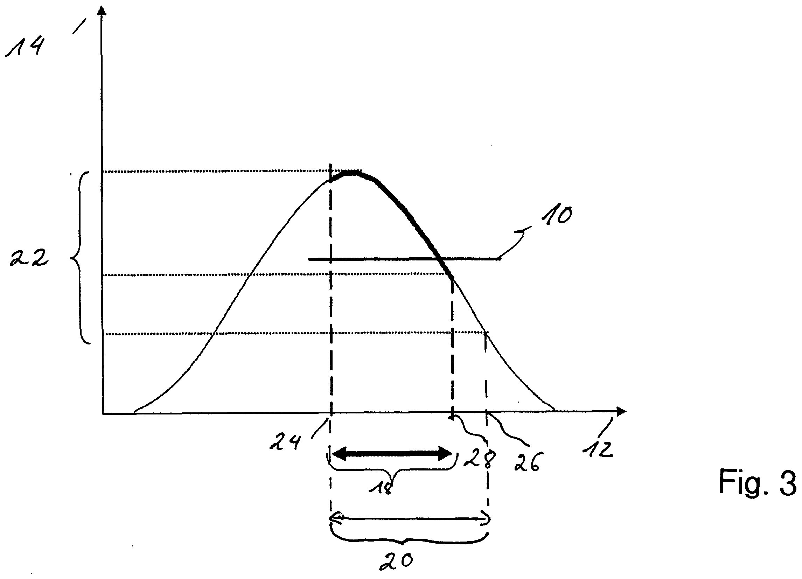

Figur 3 zeigt den Einfluss des Frequenzhubs (Wobbelbereich) des Wobbelgenerators 38 auf die Zündung und den Betrieb der Lampe für einen gewählten Arbeitspunkt 28 f_{A}.

Je nach gewähltem Frequenzhub (Δf) wird die gewünschte Lampenzündung mittels Frequenzdurchstimmung ermöglicht (Überschreitung der Zündschwelle 10) und ein erfolgreicher Lampenbetrieb auch bei niedrigen Intensitätswerten erzielt.

### Ablauf:

Wird der Arbeitspunkt 28 f_{A} mit einer Lampenintensität unterhalb der Zündschwelle 10 gewünscht, so startet die Elektronik nicht mit der Arbeitsfrequenz f_{A}, sondern mit fₘᵢₙ und verstimmt die Frequenz kontinuierlich (Wobbelvorgang) bis zum gewählten Arbeitspunkt f_{A}. Dabei wird die Zündschwelle 10 überschritten, die Lampe startet und bleibt auch bei einer Unterschreitung der Zündschwelle 10 weiterhin in Betrieb.

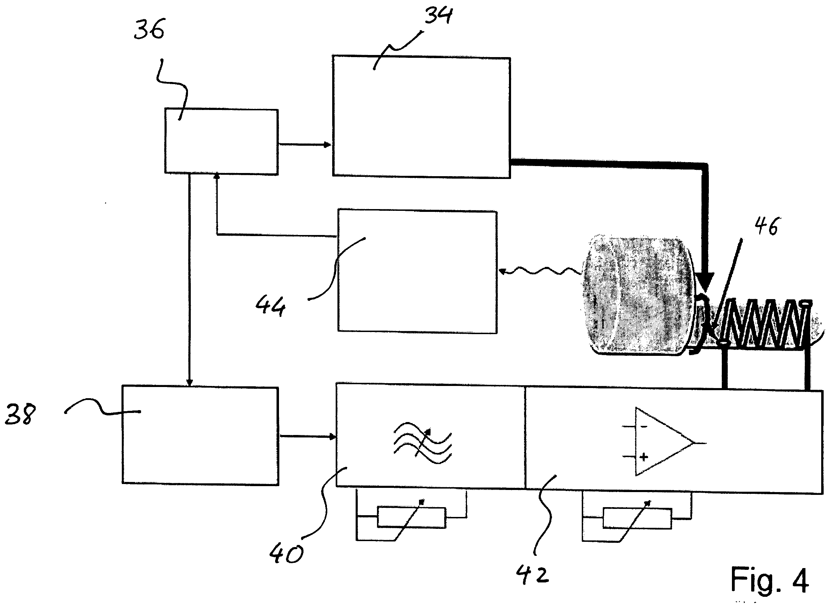

In Figur 4 ist ein Blockschaltbild dargestellt.

Das Blockschaltbild zeigt die erforderlichen Funktionsbaugruppen der elektronischen Schaltungsanordnung.

### Funktionsablauf:

Nach Anlegen der Versorgungsspannung wird von der Steuerung 36 der Zündspannungsgenerator 34 und der Wobbler 38 aktiviert. Die Steuerung bewertet das Signal, das sie vom Detektor 44 erhält und hält diesen Vorgang so lange aufrecht bis es zu einer erfolgreichen Zündung gekommen ist. Dabei zeigt sich die offene Funkenstrecke 46 als zusätzlich hilfreiches Element zur Lampenzündung. Nach einer Zündung werden Zündgerator 34 und Wobbler 38 deaktiviert. Gleichzeitig wird die f_{A} 28 dem Verstärker 42 zugeführt. Der Oszillator 40 wird mittels der Steuerung 36 über den Wobbler 38 motiviert und erzeugt die gewünschten Frequenzen 24, 26, und 28 Aus der Funktion des Oszillators 40 ergeben sich der Wobbelbereich 18 und der maximale Einstellbereich der Frequenz 20.

### Bezugszeichenliste

- 10: Zündschwelle
- 12: Frequenz
- 14: Intensität
- 16: Verstärkungsfaktor
- 18: Wobbelbereich
- 20: Einstellbereich der Arbeitsfrequenz
- 22: Intensitätsänderung
- 24: f _{A min}: Kleinste Arbeitsfrequenz
- 26: f _{A max}: Größte Arbeitsfrequenz
- 28: f _{A}: Frequenz im Arbeitspunkt A
- 30: f _{R1}: Resonanzfrequenz mit Verstärkung 1
- 32: f _{R5}:
- 34: Zündgenerator
- 36: Steuerung
- 38: Wobbelgenerator
- 40: Oszillator
- 42: Verstärker
- 44: Detektor
- 46: Zündung

## Patentansprüche

1. Verfahren zum Betreiben einer elektrodenlosen Entladungslampe bei einer Arbeitsfrequenz (28), wobei die elektrodenlose Entladungslampe einen aus Glas bestehenden Lampenkörper, welcher mit Gas gefüllt ist, aufweist und wobei die Entladungslampe innerhalb eines Metallgehäuses angeordnet ist, und wobei während der Zündung der Entladungslampe die Arbeitsfrequenz (28) der Lampe mittels eines Wobbelgenerators (38), welcher innerhalb des Metallgehäuses angeordnet ist, beeinflusst wird, **dadurch gekennzeichnet, dass** während der Beeinflussung der Arbeitsfrequenz (28) eine zusätzliche Zündspannung erzeugt wird.

2. Verfahren zum Betreiben einer Entladungslampe nach Anspruch 1, **dadurch gekennzeichnet, dass** die Arbeitsfrequenz (28) beim Zünden der Lampe mittels Wobbelgenerator verringert wird.

3. Verfahren zum Betreiben einer Entladungslampe nach Anspruch 2, **dadurch gekennzeichnet, dass** der Wobbelgenerator (38) die Oszillatorfrequenz im eingestellten Arbeitspunkt abwärts zu einer niedrigen Frequenz verstimmt, wobei, wenn der Wobbelgenerator hierbei eine niedrigste Arbeitsfrequenz (24) erreicht, die Frequenz wieder erhöht wird bis die Arbeitsfrequenz (28) anschließend wieder erreicht wird.

4. Verfahren zum Betreiben einer Entladungslampe nach einem der vorstehenden Ansprüche, **dadurch gekennzeichnet, dass** die zusätzliche Zündspannung mittels eines Hochspannungstrafos erzeugt wird und an die Lampe angelegt wird.

5. Verfahren zum Betreiben einer Entladungslampe nach einem der vorstehenden Ansprüche, **dadurch gekennzeichnet, dass** durch die zusätzliche Zündspannung eine definierte Luftentladung nahe des Lampenkolbens erfolgt.

6. Verfahren zum Betreiben einer Entladungslampe nach einem der vorstehenden Ansprüche, wobei die zusätzliche Zündspannung so lange wiederholt zur Verfügung gestellt wird, bis es zu einer erfolgreichen Zündung gekommen ist.

7. Verfahren zum Betreiben einer Entladungslampe nach einem der vorstehenden Ansprüche, wobei mittels des Wobbelgenerators (38) während der Zündphase die Ausgangsfrequenz zyklisch verstimmt wird.

8. Vorrichtung zum Betreiben einer Lampe nach einem der Ansprüche 1 bis 7.

## Claims

1. A method for operating an electrode-free discharge lamp at a working frequency (28), the electrode-free discharge lamp having a lamp body which consists of glass and is filled with gas, and the discharge lamp being arranged within a metal housing, and, during the ignition of the discharge lamp, the working frequency (28) of the lamp being influenced by means of a sweep generator (38) which is arranged within the metal housing, **characterized in that** an additional ignition voltage is generated while influencing the working frequency (28).

2. The method for operating a discharge lamp according to claim 1, **characterized in that** the working frequency (28) is reduced by means of the sweep generator when the lamp is ignited.

3. The method for operating a discharge lamp according to claim 2, **characterized in that** the sweep generator (38) detunes the oscillator frequency at the set working point down to a low frequency, and, when the sweep generator reaches a lowest working frequency (24), the frequency being increased again until the working frequency (28) is subsequently reached again.

4. The method for operating a discharge lamp according to any of the preceding claims, **characterized in that** the additional ignition voltage is generated by means of a high-voltage transformer and is applied to the lamp.

5. The method for operating a discharge lamp according to any of the preceding claims, **characterized in that** a defined air discharge close to the lamp bulb is caused by the additional ignition voltage.

6. The method for operating a discharge lamp according to any of the preceding claims, wherein the additional ignition voltage is provided repeatedly until successful ignition has occurred.

7. The method for operating a discharge lamp according to any of the preceding claims, wherein the output frequency is cyclically detuned by means of the sweep generator (38) during the ignition phase.

8. A device for operating a lamp according to any of claims 1 to 7.

## Revendications

1. Procédé permettant de faire fonctionner une lampe à décharge sans électrodes à une fréquence de travail (28), dans lequel la lampe à décharge sans électrodes présente un corps de lampe en verre, lequel est rempli de gaz, et dans lequel la lampe à décharge est disposée à l'intérieur d'un boîtier métallique, et dans lequel, pendant l'allumage de la lampe à décharge, la fréquence de travail (28) de la lampe est influencée au moyen d'un générateur de balayage (38), lequel est disposé à l'intérieur du boîtier métallique, **caractérisé en ce qu'**une tension d'allumage supplémentaire est générée pendant l'influence de la fréquence de travail (28).

2. Procédé permettant de faire fonctionner une lampe à décharge selon la revendication 1, **caractérisé en ce que** la fréquence de travail (28) est réduite lors de l'allumage de la lampe au moyen d'un générateur de balayage.

3. Procédé permettant de faire fonctionner une lampe à décharge selon la revendication 2, **caractérisé en ce que** le générateur de balayage (38) désaccorde la fréquence d'oscillateur vers le bas jusqu'à une basse fréquence au point de travail réglé, dans lequel, lorsque le générateur de balayage atteint ainsi une fréquence de travail la plus basse (24), la fréquence est à nouveau augmentée jusqu'à ce que la fréquence de travail (28) soit ensuite à nouveau atteinte.

4. Procédé permettant de faire fonctionner une lampe à décharge selon l'une des revendications précédentes, **caractérisé en ce que** la tension d'allumage supplémentaire est générée au moyen d'un transformateur haute tension et est appliquée à la lampe.

5. Procédé permettant de faire fonctionner une lampe à décharge selon l'une des revendications précédentes, **caractérisé en ce qu'**une décharge d'air définie est produite à proximité de l'ampoule de lampe par la tension d'allumage supplémentaire.

6. Procédé permettant de faire fonctionner une lampe à décharge selon l'une des revendications précédentes, dans lequel la tension d'allumage supplémentaire est fournie de manière répétée jusqu'à ce qu'un allumage soit réussi.

7. Procédé permettant de faire fonctionner une lampe à décharge selon l'une des revendications précédentes, dans lequel la fréquence de sortie est désaccordée de manière cyclique au moyen du générateur de balayage (38) pendant la phase d'allumage.

8. Dispositif permettant de faire fonctionner une lampe selon l'une des revendications 1 à 7.
